# EUROPEAN PATENT APPLICATION

(11) **EP 1 990 993 A2**
(43) Date of publication of application: **12.11.2008**
(21) Application number: 07012073.8
(22) Date of filing: 20.06.2007
(51) Int. Cl.: H04N 5/64

(54) **Tuner-detachable multimedia system, and connection structure for the same**

(30) Priority: 09.05.2007 KR 20070044867
(71) Applicant: DVICO Inc., Bundang-gu Sungnam-si Kyonggi do 463-810 (KR)
(72) Inventor: Park, Young-Jin, Yongin-si Kyungki-do 448-548 (KR); Lee, Jun-Byung, Kunpo-si Kyungki-do 435-010 (KR)
(74) Representative: Weber, Joachim

(57) **Abstract**

Provided is a tuner-detachable multimedia system that can selectively use a function of an multimedia system and a function of a set-top box. A tuner module is detachably installed in one side of the multimedia system. Therefore, only when necessary, the tuner module is slidably inserted. The user can use the system in various ways according to installation environments. In addition, the user can enjoy more various cultures according to users' space and life conditions. Further, users who do not need the set-top box can avoid unnecessary expense.

## Description

### BACKGROUND OF THE INVENTION

### 1. Field of the Invention

The present invention relates to a multimedia system that can selectively use a function of a multimedia device and a function of a set-top box. In the multimedia system, a tuner module is detachably installed in one side of the multimedia device. Therefore, only when necessary, the tuner module is slidably inserted such that users can use the system in various ways according to installation environments.

### 2. Description of the Related Art

Generally, various multimedia systems and set-top boxes are produced as house appliances and widely supplied to consumers. The multimedia systems reproduce various multimedia data stored or received from the outside and provide them to users through various internal/external display devices.

A DivX player is one of the multimedia systems, which downloads a movie file or a moving picture file through a personal computer (PC) and plays the downloaded file on TV. Such a multimedia system can download various multimedia contents (e.g., a movie file or a moving picture file) or receive streaming.

A set-top box is a device that receives analog or digital broadcasting signal which is transmitted from a broadcasting station, converts the received broadcasting signals into audio and video signals, and displays the audio and video signals on.TV. The set-top box is usually placed on the TV. Recently, TVs with a built-in set-top box are produced.

The set-top box is used to receive a terrestrial digital broadcasting, a digital satellite broadcasting, or an analog cable broadcasting. Since a typical TV is designed to receive only an analog terrestrial broadcasting signal, it needs the set-top box so as to receive various broadcasting signals.

A tuner is a device or part embedded in the set-top box. The tuner receives a terrestrial, cable, or satellite broadcasting signal and tunes it into audio and video signal that users sees and hear.

As described above, there are structural problems in that the set-top box and the multimedia system must be separately purchased.

When using the electronic devices, users may need different functions. For example, some users need devices having multi-functions because of a wide activity space, and some users do not use all functions of the device because of a small activity space and deficient installation of devices.

That is, some users may want to see the movie even though they have no PC in their houses, some users may have both the PC and the TV, or some users have all devices, the multimedia system, and the set-top box. However, the devices have not been produced considering the various cases, but separately produced so that the purchasers bear extreme cost burden. In addition, there is a problem in that the functions of the device are not all used.

### SUMMARY OF THE INVENTION

An advantage of the present invention is that it provides a tuner-detachable multimedia system and a connection structure for the same, in which a tuner module is detachably installed in one side of the multimedia system. Therefore, only when necessary, the tuner module is slidably inserted such that users can use the system in various ways according to installation environments.

According to an aspect of the present invention, a tuner-detachable multimedia system includes: a body reproducing multimedia data and providing the reproduced multimedia data to a user; a tuner module detachably installed in the body to receive and tune a broadcasting signal to provide the multimedia data to the body; and a detachable structure selectively detaching the body from the tuner module.

A disc type controller or a hard type controller can be selectively used. Considering the usage convenience, the hard type controller is more suitably used.

Preferably, the tuner module includes: a tuner body formed in a large hexahedron shape and including guide protrusions protruding on left and right sides, and a stopper plate having width greater than the body at the rear surface and preventing an insertion into the system; a pin header formed in an insertion groove formed at one end of a top or bottom surface of the tuner body and including a plurality of pins; and an antenna jack connected externally to the stopper plate.

Preferably, the detachable structure includes: guide grooves formed on left and right inner peripheries of an insertion hole penetrating one side of the body; a tuner pin port connected to a main board within the body and including a plurality of pin insertion holes; guide protrusions protruding from left and right sides of the tuner module having the pin header with the plurality of pins and guiding sliding of the tuner module along the guide grooves; and a locking unit detaching the tuner module from the body, such that when the tuner module is inserted through the guide protrusions along the guide grooves of the insertion hole, and the pins of the pin header are connected to the tuner pin port.

According to another aspect of the present invention, a connection structure of a tuner-detachable multimedia system includes: guide grooves formed left and right inner peripheries of an insertion hole penetrating one side of a body; a tuner pin port connected to a main board within the body and including a plurality of pin insertion holes; and guide protrusions protruding from left and right sides of a tuner module having a pin header 26 with a plurality of pins and guiding sliding of the tuner module along the guide grooves; wherein when the tuner module is inserted through the guide protrusions along the guide grooves of the insertion hole, the pins of the pin header are connected to the tuner pin port.

Preferably, the connection structure further includes: a locking unit detaching and attaching the tuner module from/to the body.

Preferably, the locking unit includes: a locking hole formed in an L-shape at an outside of the insertion hole; a stopper plate formed on the rear surface of the tuner module and having a width greater than a tuner body; a guide hole formed to be interlockable left and right in the stopper plate; and a locker fitted into the guide hole and corresponding to the locking hole, the locker including a locking protrusion protruding downward at one end, and a head protruding out of the stopper plate at the other end.

Preferably, the locking unit includes: a locking hole formed at one side of the insertion hole; a stopper plate formed on the rear surface of the tuner module and having a width greater than a tuner body; a guide hole formed to be interlockable left and right in the stopper plate; and a locker fitted into the guide hole and corresponding to the locking hole, the locker including a support at one end, and a head protruding out of the stopper plate at the other end, whereby when the locker is interlocked within the guide hole, the locker is matched with the locking hole so that one end of the locker is released, and the other end of the locker becomes non-matching state with the locking hole.

Preferably, the locking unit includes: a tapered locking hole formed by expanding one side of the insertion hole; a stopper plate formed on the rear surface of the tuner module and having a width greater than a tuner body; a guide hole formed to be interlockable left and right in the stopper plate; and a locker fitted into the guide hole and corresponding to the locking hole, the locker including a support at one end, and a head protruding out of the stopper plate at the other end, such that when the locker is interlocked within the guide hole, the locker rises along the tapered surface of the locking hole.

Preferably, a semicircular hole is expanded in an upper portion of the insertion hole of the body, and a protrusion having a semicircular cross-section is formed at an outer periphery of the tuner module, such that correct mounting is guided when the tuner module is slidingly connected.

Preferably, a protrusion having a predetermined shape is formed in an upper portion of the insertion hole of the body, and a groove is formed in the stopper plate of the tuner module, such that when the tuner module is slidingly connected, correct mounting is guided and the tuner module is prevented from vibrating.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

Fig. 1 is a perspective view of a tuner module according to an embodiment of the present invention;

Fig. 2 is an exploded perspective view of a multimedia system according to an embodiment of the present invention;

Fig. 3 is a front view of a connection structure according to an embodiment of the present invention;

Fig. 4 is a perspective view of a connection relationship between a tuner pin port and a pin header according to an embodiment of the present invention;

Fig. 5 is a sectional view of the connection relationship between the tuner pin port and the pin header according to an embodiment of the present invention;

Fig. 6 is a sectional view of an operation state of a locking element;

Fig. 7 is a front view of the tuner pin port according to an embodiment of the present invention;

Fig. 8 is an exploded perspective view of a multimedia system according to an embodiment of the present invention; and

Fig. 9 is a front view of a connection structure according to another embodiment of the present invention.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to like elements throughout. The embodiments are described below in order to explain the present general inventive concept by referring to the figures.

The present invention provides a system that has an advantage of a general multimedia system, which can reproduce multimedia data, and an advantage of a general set-top box, which can broadcast various broadcasting signals according to a user's selection.

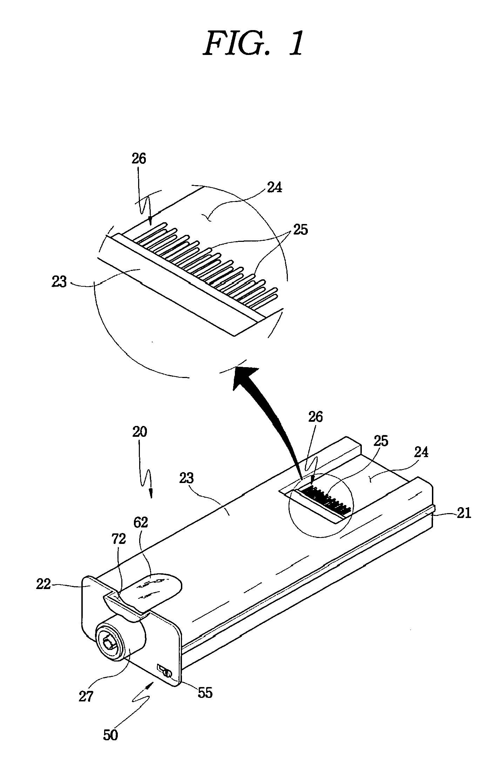

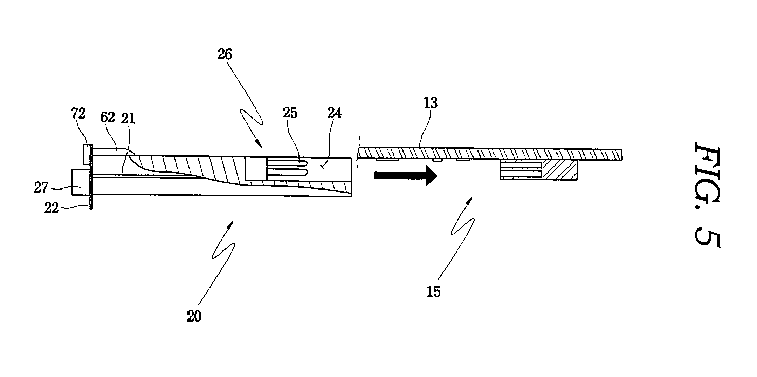

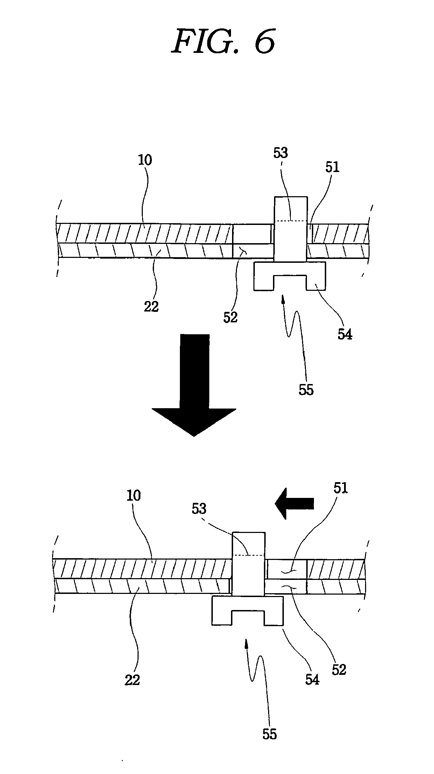

In addition, since functions of the multimedia system and the set-top box can be simultaneously performed by slidably connecting a detachable tuner module to a multimedia system, it is unnecessary to install additional electronic appliances in a small area. The system of the present invention can also be applied through a simple control in residential or living environments in which the multimedia system alone is needed or the set-top box is also provided. The system of the present invention will be described below in detail with reference to Figs. 1 to 7.

A system body 10 reproduces various multimedia data to display them on an internal or external display device. A tuner module 20 is detachably installed in the system body 10 and receives and tunes various broadcasting signals such that the signals can be watched and heard.

An antenna cable is connected to the rear surface of the tuner module 20. Under control of a controller of the system body 10, a replay module transmits a moving picture file and a cable or wireless broadcasting. The system body 10 can be selectively detachable from the tuner module 20. In this way, a tuner-detachable multimedia system is provided.

That is, the system of the present invention can reproduce various multimedia data and receive digital terrestrial waves and satellite waves according to a user's selection. The multimedia system plays a movie file or a moving picture file, and the tuner module receives various broadcasting waves and outputs them in a voice or image format through a TV.

Only when necessary, the multimedia system and the tuner module are connected through the detachable structure. When unnecessary, the multimedia system is detached from the tuner module. Therefore, the user who wants to use the multimedia system alone does not need to purchase the tuner module, and the user who wants to use all functions and has another multimedia system in a vehicle, a residence or an office can use the multimedia system at many locations by additionally purchasing the tuner module.

Upon operation, a movie file or a moving picture file is downloaded onto an external hard disc drive and compact disc (CD) through a PC, and is reproduced by the multimedia system on a TV. One end of the antenna cable is connected to an antenna jack formed on the rear surface of the tuner module, and the other end of the antenna cable is connected to an antenna cable of the TV, so that the terrestrial broadcasting, the satellite broadcasting, and the cable broadcasting can be selectively received.

The multimedia system of the present invention can use both or either of a disc type and a hard disc type. An external hard disc can be used using a USB port. Alternatively, a CD or DVD can be used by inserting into the system body, or by inserting into an external disc driver connected through a USB. However, the present invention is not limited to these configurations.

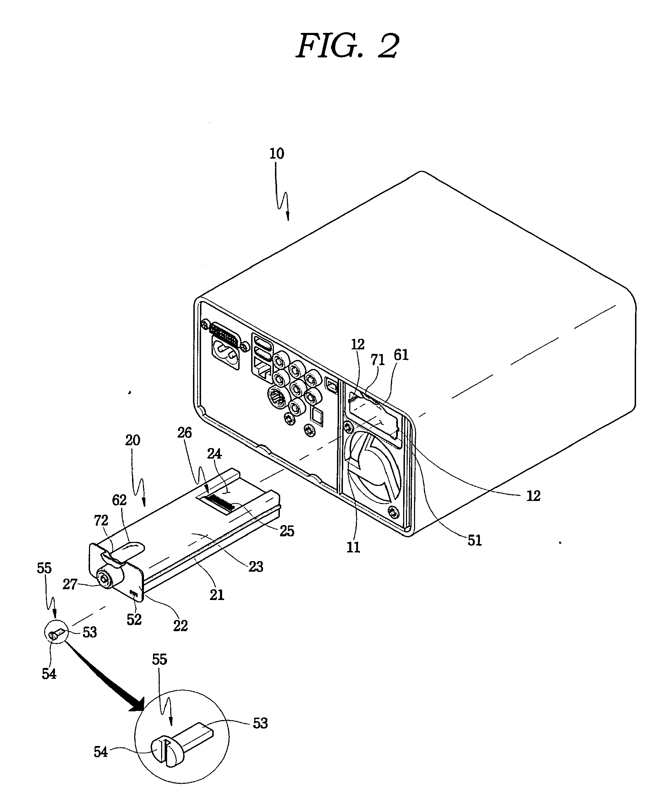

Referring to Figs. 1 and 2, the detachable type tuner module 20 includes guide protrusions 21 protruding on left and right sides, and a stopper plate 22 formed on the rear surface and having a width greater than a hexahedral tuner body 23. The stopper plate 23 prevents the tuner module from being inserted into the inside of the system. An insertion groove 24 is formed at one end of a top or bottom surface of the tuner body 23. A pin header 26 with a plurality of pins 25 is formed in the insertion groove 24.

In addition, an antenna jack 27 may be formed to protrude outward from the stopper plate 22. This structure is suitable for a detachable type and is easy to carry.

It is preferable to carry the tuner module 20 with a separate cover. The cover protecting the pin header 26 may be provided in various shapes. The structure and operation of the tuner module 20 will be described below in detail with reference to the connection structure.

The present invention has a feature in that the system body 10 and the tuner module 20 can be detachable. As illustrated in Fig. 2, the tuner module 20 slides into the system body 10.

That is, the detachable structure for the system body 10 and the tuner module 20 includes guide grooves 12 formed on left and right inner peripheries of an insertion hole 11 penetrating one side of the system body 10, and a tuner pin port 15 connected to a main board 13 within the system body 10 and having a plurality of pin insertion holes 14. Guide protrusions 21 protrude on left and right sides of the tuner module 20 including a pin header 26 with a plurality of pins 25. The guide protrusions 21 are fitted into the guide grooves 12 to guide the sliding of the tuner module 20 into the system body 10.

The tuner module 20 is inserted through the guide protrusions 21 along the guide grooves 12 of the insertion hole 11, and the pins 25 of the pin header 26 are connected to the tuner pin port 15.

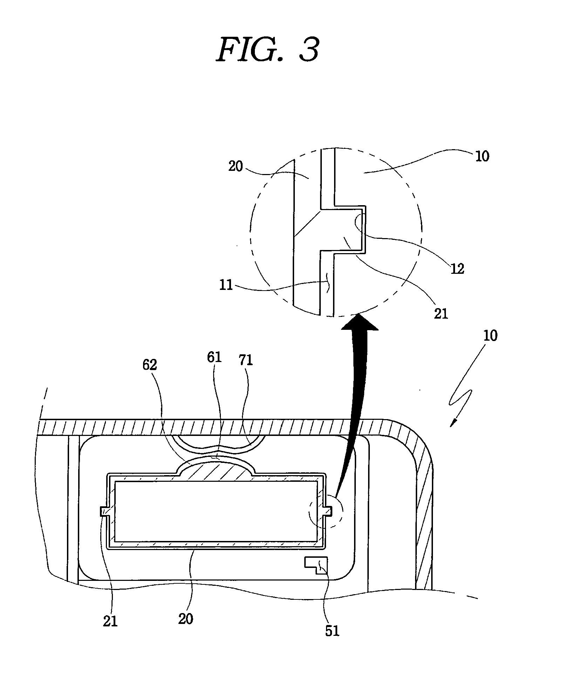

In other words, the tuner module 20 is slidingly inserted into the system body 10, the insertion hole 11 is formed on one side of the tuner module 20, and the guide grooves 12 are formed on the left and right inner peripheries of the insertion hole 11, as illustrated in Figs. 2 and 3.

Therefore, when the tuner module 20 is inserted, the guide grooves 12 are slidingly fitted into the guide protrusions 21 protrusion on the left and right sides of the tuner module 20. In this case, in a state where the sliding of the turner module 20 is guided, the tuner module 20 is pushed to the end.

A connection structure for the tuner module 20 and the system body 10 will be described below in detail.

The present invention provides a connection structure for connecting the system body 10 to the tuner module 20. The construction of the connection structure is identical to that of the above-described system.

Guide grooves 12 are formed on left and right inner peripheries of an insertion hole 11 penetrating one side of the system body 10, and a tuner pin port 15 is connected to a main board 13 within the system body 10 and includes a plurality of pin insertion holes 14.

Guide protrusions 21 protrude on left and right sides of the tuner module 20 including a pin header 26 with a plurality of pins 25. The guide protrusions 21 are fitted into the guide grooves 12 to guide the sliding of the tuner module 20 into the system body 10. The tuner module 20 is inserted through the guide protrusions 21 along the guide grooves 12 of the insertion hole 11, and the pins 25 of the pin header 26 are connected to the tuner pin port 15.

The guide protrusions 21 of the tuner module 20 slides along the guide grooves 12 of the insertion hole 11, and the pin header 26 of the top or bottom surface of the tuner module 20 is fitted into the tuner pin port 15 of the main board 13 formed in the inside of the system body 10.

It is preferable that the pin header 26 of the tuner module 20 is connected to the top or bottom surface. Therefore, the corresponding tuner pin port 15 is connected to a location where the pins 25 of the pin header 26 can be fitted.

The tuner pin port 15 and the pins 25 of the pin header 26 are connected to each other to perform various functions under control of the main board 13 and the controller. As described above, the tuner pin port 15 and the pins 25 of the pin header 26 control the connection between the electronic devices and parts so as to perform the functions of the multimedia system and the set-top box.

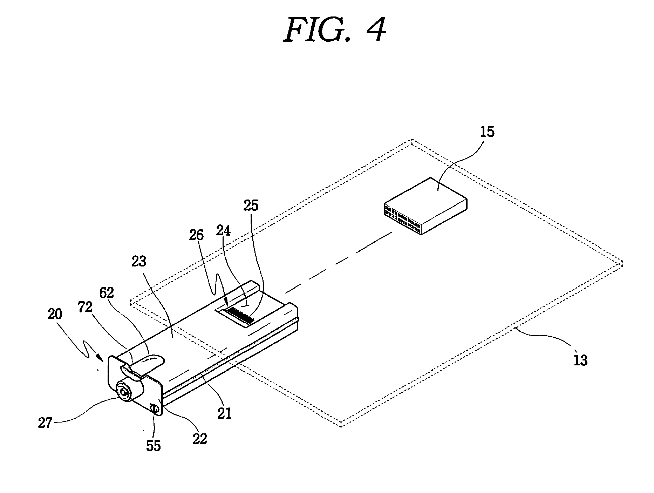

Although the pin header 26 with 22 pins and the corresponding tuner pin port 15 only are illustrated in Fig. 4, the present invention is not limited thereto. A smaller or larger number of pins 25 may be formed according to a fabrication convenience and a future development capability.

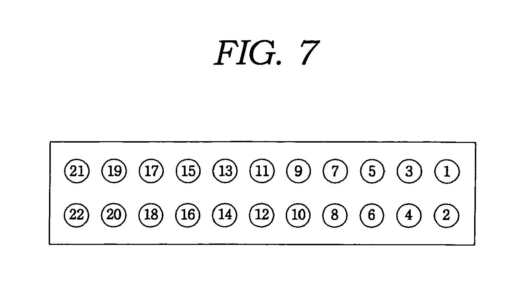

The present applicant knew that the most suitable number of the tuner pin port 15 and the pins 25 of the pin header 26 is 22. Therefore, the pins used by the present applicant will be defined with reference to Fig. 7. In Fig. 7, the number inside the circle represents the pin number.

Numbers 1 and 2 represent GND, numbers 3 and 4 represent USB Data(+) and USB Data(D-), and numbers 5 and 6 represent GND. Numbers 7, 8, 9 and 10 represent SPI Signal(Valid), SPI Signal(Sync), SPI signal(Data), and SPI Signal(Clock), respectively. Numbers 11 and 12 represent power(3.3 V) and power(3.3V), numbers 13 and 14 represent GND, and numbers 15 and 16 represent power(5V). Numbers 17 and 18 represent GND, numbers 19 and 20 represent NI(not used). Numbers 21 and 22 represent Reset and GND, respectively.

The numbers 1, 2, 5, 6, 13, 14, 17, 18 and 22 are GND pins connected to the multimedia system M-4000 (which is a name of the system implemented from the present invention by the present applicant). The numbers 3 and 4 are USB data pins. That is, the USB data are transmitted or received through the numbers 3 and 4. Generally, TV channel information is received through the USB data. When a user records the USB data, the USB data are stored in the hard disc of the multimedia system through these lines.

The numbers 7 to 10 are SPI signals that outputs images on the TV when the multimedia system is actually connected to the TV. The numbers 11 and 12 are power pins that transmit 3.3V power to T430 (T410) and transmit 3.3V power to chips using 3.3 V in T430 (T410) (the Tuner IC does not use this power).

The numbers 15 and 16 are power pins that transmit 5V power to the T430 (T410). Using 5 V, T430 (T410) makes powers other than 3.3 V. In addition, 3.3 V used in the tuner IC is made. The number 21 is a reset pin that applies a reset to the USB IC of the T430 (T410).

Preferably, a locking unit 50 is further provided in the detachable structure of the system body 10 and the tuner module 20. As illustrated in Figs. 2 to 6, the locking unit 50 includes a locking hole 51 formed in an L-shape at the outside of the insertion hole 11 of the system body 10. A stopper plate 22 having a width greater than that of the tuner body 23 is formed on the rear surface of the tuner module 20. A guide hole 52 is formed in the stopper plate 22 such that it is interlockable left and right.

A locker 55 is fitted into the guide hole 52 and corresponds to the locking hole 51. The locker 55 includes a locking protrusion 53 protruding downward, and a head 54 protruding out of the stopper plate 22. The connection of the locking protrusion 53 and the head 54 prevents the tuner module 20 from being released from the system body 10 due to vibration or the like.

That is, as shown in the drawing, the stopper plate 22 of the tuner module 20 prevents the damage when the tuner module 20 is further inserted into the insertion hole 11 and pushes the tuner pin port 15. In this state, the locker 55 fitted into the guide hole 52 formed in the stopper plate 22 is inserted into the L-shaped locking hole 51, such that it is not easily released.

The locker 55 is first fitted into the L-shaped locking hole 51 and the locking protrusion 53 of the locker 55 is entered toward one side of the locking hole 51 having a smaller width when the user pushes the locker 55 along the guide hole 52. Therefore, the locking protrusion 53 is fitted into the locking hole 51 such that it is not released.

The present invention provides an another embodiment of a locking unit exhibiting the same purpose and effect as the above-described locking unit 50.

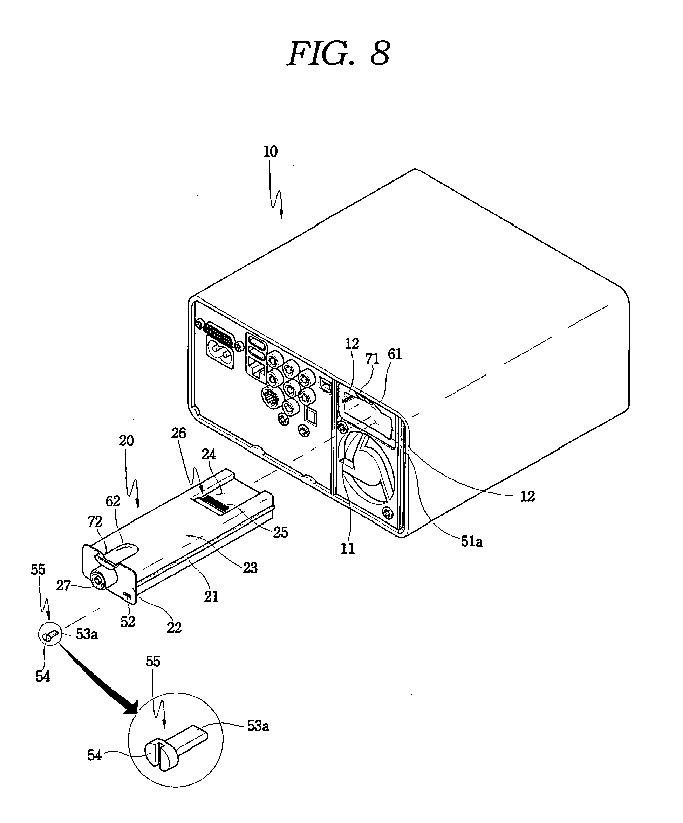

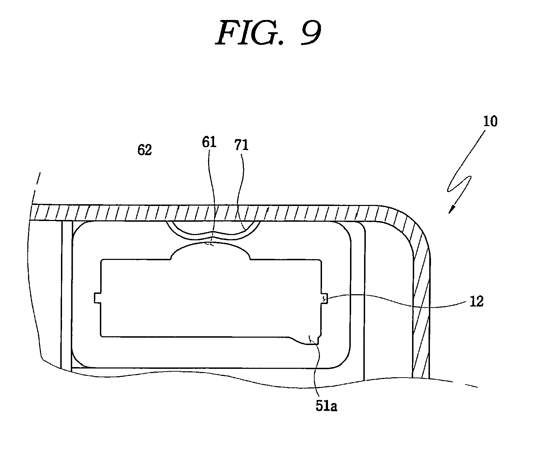

As illustrated in Figs. 8 and 9, the locking unit 50 includes a locking hole 51 a, a stopper plate 22, and a guide hole 52. The locking hole 51 a is formed by expanding one side of the insertion hole 11 of the system body 10. The stopper plate 22 having a width greater than that of the tuner body 23 is formed on the rear surface of the tuner module 20. The guide hole 52 is formed in the stopper plate 22 such that it is interlockable left and right.

The locker 55 is fitted into the guide hole 52 and corresponds to the locking hole 51a. The locker 55 includes a support 53a formed in one end, and a head 54 protruding out of the stopper plate 22. That is, the second embodiment differs from the first embodiment in view of the shape of the locker 55 and the locking hole 51 a.

When the tuner module 20 is inserted into the insertion hole 11 of the body 10, the locker 55 of the tuner module 20 is matched and inserted into the locking hole 51 a of the body 10. Then, when the locker 55 is pushed left, the locker 55 moves left along the guide hole 52. Thus, the locking hole 51a becomes non-matched state. In this way, the tuner module 20 is connected to the body 10.

In a further embodiment, the locking hole 51a may be tapered. In this case, when the locker 55 is pushed left in such a state that the tuner module 20 is inserted into the body 10, the locker 55 moves along the outer periphery of the locking hole 51 a. The support 53a of the locker 55 rises along the tapered surface and is locked. In this way, the tuner module 20 is fitted into the insertion hole 11 such that its connection is not released.

A semicircular hole 61 is formed at the upper portion of the insertion hole 11 of the system body 10, and a semicircular protrusion 62 is formed at the outer periphery of the tuner module 20. When slidingly connecting the tuner module 20, the correct mounting is guided. That is, as illustrated in Figs. 1, 2 and 3, the semicircular protrusion 62 protruding from the tuner module 20 is fitted into the semicircular hole 61 of the insertion hole 11and smoothly connected thereto. In addition, the tuner module 20 is prevented from vibrating left and right within the insertion hole 11. Further, the user can feel the pushing sense.

In a further embodiment, a protrusion 71 is formed at the upper portion of the insertion hole 11 of the system body 10, and a groove 72 is formed in the stopper plate 22 of the tuner module 20. Therefore, when slidingly connecting the tuner module 20, the correct mounting is guided and the tuner module 20 can be prevented from vibrating. That is, the protrusion 71 and the groove 72 exhibit the same operation as the semicircular protrusion 62 and the expanded semicircular hole 61.

As described above, the multimedia system of the present invention can simultaneously perform the existing multimedia system and the existing set-top box such that the movie file or the moving picture file can be reproduced on TV. In addition, the digital satellite broadcasting, the terrestrial broadcasting, and the analogy/digital cable broadcasting can be easily provided.

Further, by using the system of the present invention, users can enjoy more various cultures according to users' space and life conditions. Further, users who do not need the set-top box can avoid unnecessary expense.

One tuner module can be detachable and attachable from/to two or more multimedia systems. Thus, the tuner module is easy to carry.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A tuner-detachable multimedia system, comprising:
a body reproducing multimedia data and providing the reproduced multimedia data to a user;
a tuner module detachably installed in the body to receive and tune a broadcasting signal to provide the multimedia data to the body; and
a detachable structure selectively detaching the body from the tuner module.

2. The tuner-detachable multimedia system according to claim 1,
wherein the tuner module includes:
a tuner body formed in a large hexahedron shape and including guide protrusions protruding on left and right sides, and a stopper plate having width greater than the body at the rear surface and preventing an insertion into the system;
a pin header formed in an insertion groove formed at one end of a top or bottom surface of the tuner body and including a plurality of pins; and
an antenna jack connected externally to the stopper plate.

3. The tuner-detachable multimedia system according to claim 1 or 2,
wherein the detachable structure includes:
guide grooves formed on left and right inner peripheries of an insertion hole penetrating one side of the body;
a tuner pin port connected to a main board within the body and including a plurality of pin insertion holes;
guide protrusions protruding from left and right sides of the tuner module having the pin header with the plurality of pins and guiding sliding of the tuner module along the guide grooves; and
a locking unit detaching the tuner module from the body, such that when the tuner module is inserted through the guide protrusions along the guide grooves of the insertion hole, and the pins of the pin header are connected to the tuner pin port.

4. A connection structure of a tuner-detachable multimedia system, comprising:
guide grooves formed left and right inner peripheries of an insertion hole penetrating one side of a body;
a tuner pin port connected to a main board within the body and including a plurality of pin insertion holes; and
guide protrusions protruding from left and right sides of a tuner module having a pin header with a plurality of pins and guiding sliding of the tuner module along the guide grooves;
wherein when the tuner module is inserted through the guide protrusions along the guide grooves of the insertion hole, the pins of the pin header are connected to the tuner pin port.

5. The connection structure according to claim 4, further comprising:
a locking unit attaching or detaching the tuner module to or out of the body.

6. The connection structure according to claim 5,
wherein the locking unit includes:
a locking hole formed in an L-shape at an outside of the insertion hole;
a stopper plate formed on the rear surface of the tuner module and having a width greater than a tuner body;
a guide hole formed to be interlockable left and right in the stopper plate; and
a locker fitted into the guide hole and corresponding to the locking hole, the locker including a locking protrusion protruding downward at one end, and a head protruding out of the stopper plate at the other end.

7. The connection structure according to claim 5,
wherein the locking unit includes:
a locking hole formed at one side of the insertion hole;
a stopper plate formed on the rear surface of the tuner module and having a width greater than a tuner body;
a guide hole formed to be interlockable left and right in the stopper plate; and
a locker fitted into the guide hole and corresponding to the locking hole, the locker including a support at one end, and a head protruding out of the stopper plate at the other end, whereby when the locker is interlocked within the guide hole, the locker is matched with the locking hole so that one end of the locker is released, and the other end of the locker becomes non-matching state with the locking hole.

8. The connection structure according to claim 5,
wherein the locking unit includes:
a tapered locking hole formed by expanding one side of the insertion hole;
a stopper plate formed on the rear surface of the tuner module and having a width greater than a tuner body;
a guide hole formed to be interlockable left and right in the stopper plate; and
a locker fitted into the guide hole and corresponding to the locking hole, the locker including a support at one end, and a head protruding out of the stopper plate at the other end, such that when the locker is interlocked within the guide hole, the locker rises along the tapered surface of the locking hole.

9. The connection structure according to claim 4,
wherein a semicircular hole is expanded in an upper portion of the insertion hole of the body, and a protrusion having a semicircular cross-section is formed at an outer periphery of the tuner module, such that correct mounting is guided when the tuner module is slidingly connected.

10. The connection structure according to claim 4,
wherein a protrusion having a predetermined shape is formed in an upper portion of the insertion hole of the body, and a groove is formed in the stopper plate of the tuner module, such that when the tuner module is slidingly connected, correct mounting is guided and the tuner module is prevented from vibrating.
